# EUROPEAN PATENT SPECIFICATION

(11) **EP 2 645 587 B1**
(45) Date of publication and mention of the grant of the patent: **11.05.2016**
(21) Application number: 12162210.4
(22) Date of filing: 29.03.2012
(51) Int. Cl.: H04B 3/54

(54) **Transmitting data by communication on power**
Übertragung von Daten durch Kommunikation nach Leistung
Transmission de données par communication sur puissance

(43) Date of publication of application: 02.10.2013
(73) Proprietor: GE Oil & Gas UK Limited, Nailsea Bristol BS48 1BS (GB)
(72) Inventor: Puchianu, Silviu, Nailsea, Bristol BS48 1BS (GB); Smart, Hilton, Nailsea, Bristol BS48 1BS (GB); Morley, Graham, Nailsea, Bristol BS48 1BS (GB); Davis, Julian, Nailsea, Bristol BS48 1BS (GB); Simpson, Steven, Nailsea, Bristol BS48 1BS (GB)
(74) Representative: Emerson, Peter James

(56) References cited:
- GB-A- 2 352 376
- US-A1- 2009 195 192

## Description

### Field of the Invention

This invention relates to transmitting data by communication on power in a control system for a subsea hydrocarbon well facility.

### Background of the Invention

Communication on power (COP) systems are electrical power and data transmission systems where an analogue data waveform is superimposed on a power waveform at one end and, at another other end, power and data filters are used to separate the power waveform from the data waveform.

For long offset power and data transmission systems (for example tens or hundreds of miles), this method allows for bi-directional transmission of power and data on the same copper wires.

These systems are widely used in control systems for subsea hydrocarbon well facilities.

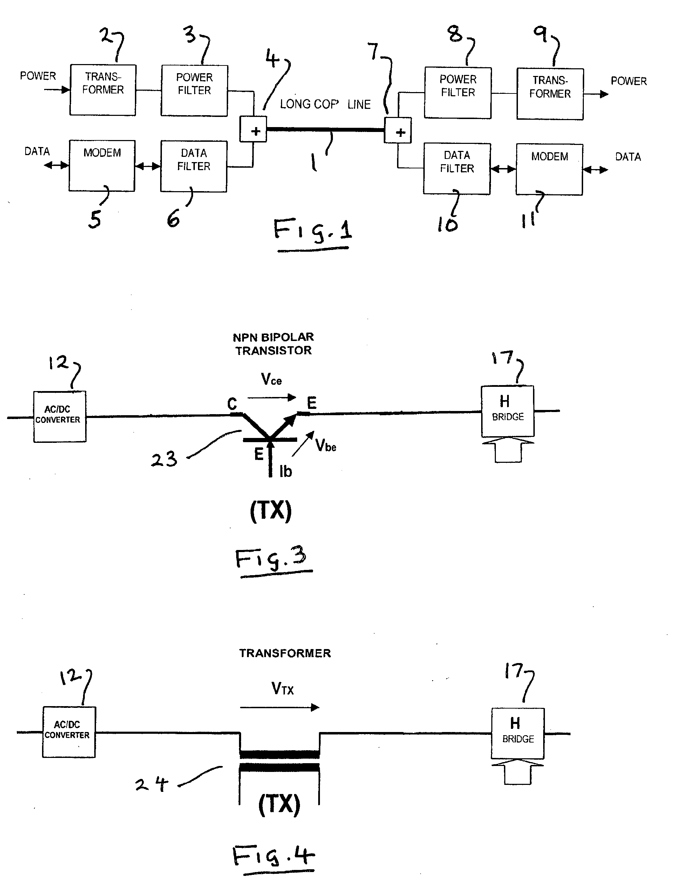

A known system is illustrated in Fig. 1 and uses hardware analogue filters. These filters are not accurate, they are space intensive and they introduce distortions, noise and power losses. Furthermore transients on the power source can corrupt the data transmission. More particularly, at a topside end of a long COP line 1 electrical power is supplied by a transformer 2 and a power filter 3 to a combiner 4 where data from a modem 5 and a data filter 6 is combined with the power waveform. Also, data can be extracted from line 1 via the filter 6 and the modem 5. At the other, subsea end of line 1, electrical power is extracted from a combiner 7 via a power filter 8 and a transformer 9 and data is extracted via a data filter 10 and a modem 11. Also, data can be sent to the topside end via modem 11 and filter 10 for extraction from combiner 4.

As prior art, there may be mentioned US-A-4 398 178, WO 00/46923, EP-A-2 104 240, GB-A-2 441 811, WO 2004/028064, EP-A-0 463 341, US 2006/079971 and GB-A-2 352 376. As further prior art, there may be mentioned US 2009/0195192, which discloses a communication system for an intelligent light.

### Summary of the Invention

According to the present invention from one aspect, there is provided a communication system for transmitting electrical power and data from a first end of a transmission line to a second end of the transmission line, the apparatus comprising, at said first end:
supply means for supplying a direct current (DC) signal;
modulator means coupled with said supply means for modulating said DC signal with an analogue data signal; and
inverter means coupled with said modulator means for converting the modulated DC signal to a communication on power (COP) signal comprising an AC power signal modulated by analogue data, the inverter means being coupled with the first end of said transmission line for the transmission of said COP signal to said second end of the transmission line,
wherein, at said first end, there is means for receiving from said transmission line a data signal from said second end,
and wherein the system comprises a control system for a subsea hydrocarbon well facility, said first end being topside and said second end being subsea.

Said supply means could comprise rectifier means for converting an alternating current (AC) power signal to said DC signal.

Said inverter means could comprise an H-bridge and control means for generating signals for operating the switches of the H-bridge, said signals being pulse width modulated signals so that said COP signal is a sine wave power signal modulated by said analogue data.

In one embodiment, said modulator means comprises a transistor with its collector and emitter in series between said supply means and said inverter means and its base connected to receive said analogue data signal.

In another embodiment, said modulator means comprises a transformer having a first winding in series between said supply means and said inverter means and a second winding connected to receive said analogue data signal.

The received data signal could be an analogue data signal in use of the system, said receiving means comprising means for converting the received analogue signal to a digital data signal. Typically, the system then comprises a modem for receiving the digital data signal, the modem further being coupled with said modulator means for supplying the analogue data signal for modulating said DC signal.

According to the invention from another aspect, there is provided a method of transmitting electrical power and data from a first end of a transmission line to a second end of the transmission line, the method comprising, at said first end:
using supply means to supply a direct current (DC) signal;
using modulator means to modulate said DC signal with an analogue data signal; and
using inverter means to convert the modulated DC signal to a communication on power (COP) signal comprising an AC power signal modulated by analogue data, the inverter means being coupled with the first end of said transmission line for the transmission of said COP signal to said second end of the transmission line,
wherein, at said first end, there is means which receive from said transmission line a data signal from said second end,
and wherein the method is performed in a control system for a subsea hydrocarbon well facility, said first end being topside and said second end being subsea.

### Brief Description of the Drawings

Fig. 1 is a block diagram of a known COP system;
Fig. 2 is a block diagram of a COP system according to an embodiment of the invention; and
Figs. 3 and 4 show examples of a modulator for the system of Fig. 2.

### Detailed Description of the Invention

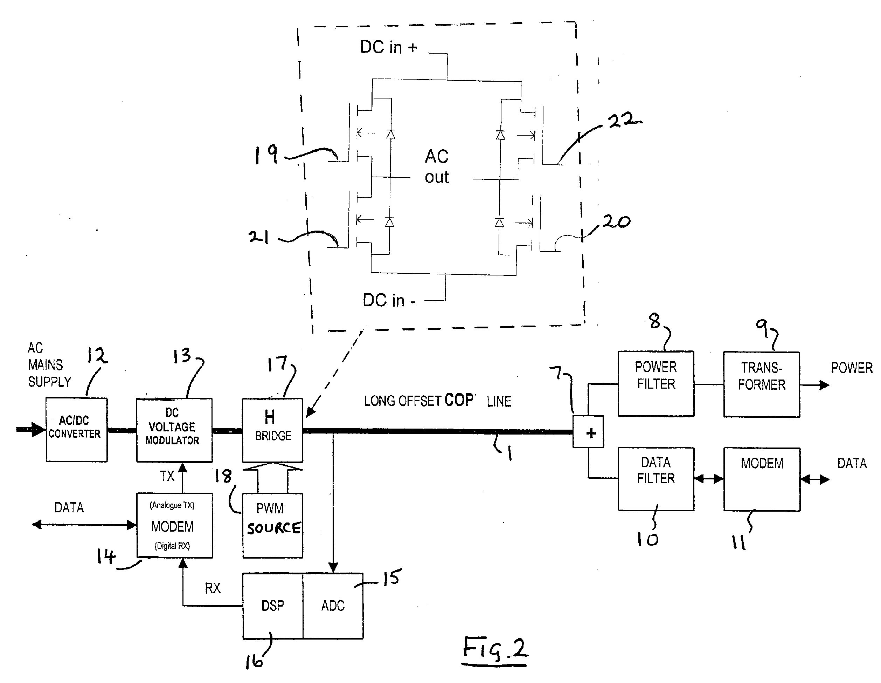

Referring to Fig. 2, in which items which correspond with items in Fig. 1 have the same reference numerals as in Fig. 1, at the topside end of a control system for a hydrocarbon well facility, the apparatus is as follows, the apparatus at the subsea end being as in Fig. 1.

Alternating current (AC) from an AC mains supply is rectified to direct current (DC) in an AC/DC converter 12, typically a full wave rectifier, and the DC is modulated by an analogue data signal by a DC voltage modulator 13 coupled with converter 12. The analogue data signal, for transmission (TX) subsea, is provided from a modem 14 coupled with the modulator 13 and supplied with data. The modem 14 also outputs data received from the subsea side via line 1, an analogue data signal on line 1 being converted to a digital data signal by an analogue to digital (ADC) converter 15 and processed by a digital signal processor (DSP) 16 coupled to a receive (RX) input of modem 14.

The output of modulator 13 is coupled to a known form of inverter comprising a so-called "pure sine wave" inverter in the form of an H-bridge 17 controlled by signals from a pulse width modulated (PWM) signal generator 18. More particularly, the H-bridge 17 comprises four field-effect transistors 19, 20, 21 and 22 connected in a bridge configuration as shown, the generator 18 producing four PWM pulse trains, two of which are used respectively to switch on and off diagonally opposite transistors 19 and 20 for a period of time and the other two are then used respectively to switch on and off diagonally opposite transistors 21 and 22 for a period of time, and so on, the output of H-bridge 17 being coupled to line 1 to provide on it a COP signal comprising an AC power signal in the form of a sine wave modulated by analogue data.

The modulated DC voltage from modulator 13 = the DC voltage from converter 12 + the analogue data signal from modem 14.

The AC output of H-bridge 17 (in the form of a COP signal) = the modulated DC voltage x a sine function dependent on the PWM signals.

The DC voltage modulator 13 can be realised in a variety of configurations.

One configuration (see Fig. 3) is based on the use of a NPN transistor 23 in series between converter 12 and H-bridge 17.

In this case:
the modulated DC voltage = the DC voltage from converter 12 - Vce
where Vce (the voltage between the collector C and the emitter E of transistor 23) is modulated under the control of lb (the base B current) and Vbe (the voltage between base B and emitter E).

Vce is modulated with a signal proportional to the analogue data signal (TX) outputted by the modem 14.

Another configuration (see Fig. 4) is based on the use of a transformer 24 having its secondary winding in series between converter 12 and H-bridge 17.

In this case:
the modulated DC voltage = the DC voltage from converter 12 - Vtx
where Vtx in the voltage across the secondary winding and is modulated with a signal proportional to the analogue data signal (TX) outputted by the modem 14.

### Advantages of using the Invention

1) High potential for standardisation and modularisation. The previous systems had to be re-designed for any new application. The proposed solution can satisfy a range of application using a standard system.
2) Higher data accuracy:
   a) due to the replacement of hardware power and data filters with digital processing;
   b) since the data waveform train can be accurately inserted in the power waveform at the most appropriate noise-free locations (e.g. at zero-crossings); and
   c) since accurate calibration of data transmission is enabled, by optimal selection of data carrier frequencies and amplitudes.
3) Higher power transmission efficiency:
   a) since programmable topside power waveforms are able to counter-act umbilical harmonic distortion effects induced by the cable; and
   b) since hardware filter power losses can be eliminated.
5) High functional flexibility:
   a) since programmable power amplitudes and power frequencies are enabled;
   b) since programmable data amplitudes and data carrier frequencies are enabled; and
   c) since accurate calibration of data transmission is enabled.
6) Higher PVC (power per volume) coefficient is enabled, due to:
   a) replacement of transformers with power switching conversion technology; and
   b) elimination of bulky hardware filters.
7) The added benefit of clean power, due to the double conversion of AC to DC and DC to AC.

## Claims

1. A communication system for transmitting electrical power and data from a first end of a transmission line (1) to a second end of the transmission line, the apparatus comprising, at said first end:
supply means (12) for supplying a direct current (DC) signal;
modulator means (13) coupled with said supply means for modulating said DC signal with an analogue data signal; and **characterized by**:
inverter means (17, 18) coupled with said modulator means for converting the modulated DC signal to a communication on power (COP) signal comprising an AC power signal modulated by analogue data, the inverter means being coupled with the first end of said transmission line for the transmission of said COP signal to said second end of the transmission line,
wherein, at said first end, there is means (15, 16) for receiving from said transmission line a data signal from said second end,
and wherein the system comprises a control system for a subsea hydrocarbon well facility, said first end being topside and said second end being subsea.

2. A system according to claim 1, wherein said supply means (12) comprises rectifier means for converting an alternating current (AC) power signal to said DC signal.

3. A system according to claim 1 or 2, wherein said inverter means (17, 18) comprises an H-bridge (17) and control means (18) for generating signals for operating the switches of the H-bridge, said signals being pulse width modulated signals so that said COP signal is a sine wave power signal modulated by said analogue data.

4. A system according to any preceding claim, wherein said modulator means (13) comprises a transistor (23) with its collector and emitter in series between said supply means (12) and said inverter means (17, 18) and its base connected to receive said analogue data signal.

5. A system according to any of claims 1 to 3, wherein said modulator means (13) comprises a transformer (24) having a first winding in series between said supply means (12) and said inverter means (17, 18) and a second winding connected to receive said analogue data signal.

6. A system according to any preceding claim, wherein the received data signal is an analogue data signal in use of the system, said receiving means (15, 16) comprising means for converting the received analogue signal to a digital data signal.

7. A system according to claim 6, comprising a modem (14) for receiving the digital data signal, the modem further being coupled with said modulator means (13) for supplying the analogue data signal for modulating said DC signal.

8. A method of transmitting electrical power and data from a first end of a transmission line (1) to a second end of the transmission line, the method comprising, at said first end:
using supply means (12) to supply a direct current (DC) signal;
using modulator means (13) to modulate said DC signal with an analogue data signal; and **characterized by**:
using inverter means (17, 18) to convert the modulated DC signal to a communication on power (COP) signal comprising an AC power signal modulated by analogue data, the inverter means being coupled with the first end of said transmission line for the transmission of said COP signal to said second end of the transmission line,
wherein, at said first end, there is means (15, 16) which receive from said transmission line a data signal from said second end,
and wherein the method is performed in a control system for a subsea hydrocarbon well facility, said first end being topside and said second end being subsea.

9. A method according to claim 8, comprising using rectifier means to convert an alternating current (AC) power signal to said DC signal;

10. A method according to claim 8 or 9, wherein said inverter means (17, 18) comprises an H-bridge (17) and control means (18) which generate signals which operate the switches of the H-bridge, said signals being pulse width modulated signals so that said COP signal is a sine wave power signal modulated by said analogue data.

11. A method according to any of claims 8 to 10, wherein said modulator means (13) comprises a transistor (23) with its collector and emitter in series between said supply means (12) and said inverter means (17, 18) and its base connected to receive said analogue data signal.

12. A method according to any of claims 8 to 11, wherein said modulator means (13) comprises a transformer (24) having a first winding in series between said supply means (12) and said inverter means (17, 18) and a second winding connected to receive said analogue data signal.

13. A method according to any of claims 8 to 12, wherein the received data signal is an analogue data signal, said receiving means (15, 16) converting the received analogue signal to a digital data signal.

14. A method according to claim 13, wherein a modem (14) receives the digital data signal, the modem further being coupled with said modulator means (13) to supply the analogue data signal to modulate said DC signal.

## Patentansprüche

1. Kommunikationssystem zum Übertragen von elektrischer Energie und Daten von einem ersten Ende einer Übertragungsleitung (1) an ein zweites Ende der Übertragungsleitung, wobei die Vorrichtung an dem ersten Ende Folgendes umfasst:
Versorgungsmittel (12) zum Liefern eines Gleichstromsignals;
Modulatormittel (13), gekoppelt mit dem Versorgungsmittel zum Modulieren des Gleichstromsignals mit einem Analogdatensignal; und **gekennzeichnet durch**:
Wechselrichtermittel (17, 18), gekoppelt mit dem Modulatormittel zum Umwandeln des modulierten Gleichstromsignals in ein Communication-on-Power(COP)-Signal, umfassend ein **durch** Analogdaten moduliertes elektrisches Wechselstromsignal, wobei das Wechselrichtermittel mit dem ersten Ende der Übertragungsleitung für das Übertragen des COP-Signals an das zweite Ende der Übertragungsleitung gekoppelt ist,
wobei es an dem ersten Ende ein Mittel (15, 16) zum Empfangen, von der Übertragungsleitung, eines Datensignals von dem zweiten Ende gibt,
und wobei das System ein Steuersystem für eine Unterwasserkohlenstoffquellenanlage umfasst, wobei das erste Ende auf der Oberseite ist und das zweite Ende unter Wasser ist.

2. System nach Anspruch 1, wobei das Versorgungsmittel (12) Gleichrichtungsmittel zum Umwandeln eines elektrischen Wechselstromsignals in das Gleichstromsignal umfasst.

3. System nach Anspruch 1 oder 2, wobei das Wechselrichtermittel (17, 18) eine H-Brücke (17) und Steuermittel (18) zum Erzeugen von Signalen zum Betätigen der Schaltungen der H-Brücke umfasst, wobei die Signale pulsweitenmodulierte Signale sind, sodass das COP-Signal ein durch die Analogdaten moduliertes elektrisches Sinuswellensignal ist.

4. System nach einem der vorhergehenden Ansprüche, wobei das Modulatormittel (13) einen Transistor (23) umfasst, dessen Kollektor und Emitter zwischen dem Versorgungsmittel (12) und dem Wechselrichtermittel (17, 18) in Reihe sind und dessen Basis verbunden ist, um das Analogdatensignal zu empfangen.

5. System nach einem der Ansprüche 1 bis 3, wobei das Modulatormittel (13) einen Transformator (24) umfasst, der eine erste Wicklung in Reihe zwischen dem Versorgungsmittel (12) und dem Wechselrichtermittel (17, 18) aufweist und eine zweite Wicklung verbunden ist, um das Analogdatensignal zu empfangen.

6. System nach einem der vorhergehenden Ansprüche, wobei das empfangene Datensignal ein Analogdatensignal in Verwendung des Systems ist, wobei das Empfangsmittel (15, 16) Mittel zum Umwandeln des empfangenen Analogsignals in ein Digitaldatensignal umfasst.

7. System nach Anspruch 6, umfassend ein Modem (14) zum Empfangen des Digitaldatensignals, wobei das Modem ferner zum Liefern des Analogdatensignals zum Modulieren des Gleichstromsignals mit dem Modulatormittel (13) gekoppelt ist.

8. Verfahren zum Übertragen von elektrischer Energie und Daten von einem ersten Ende einer Übertragungsleitung (1) an ein zweites Ende der Übertragungsleitung, wobei das Verfahren an dem ersten Ende Folgendes umfasst:
Verwenden eines Versorgungsmittels (12) zum Liefern eines Gleichstromsignals;
Verwenden eines Modulatormittels (13) zum Modulieren des Gleichstromsignals mit einem Analogdatensignal; und **gekennzeichnet durch**:
Verwenden eines Wechselrichtermittels (17, 18) zum Umwandeln des modulierten Gleichstromsignals in ein Communication-on-Power(COP)-Signal, umfassend ein **durch** Analogdaten moduliertes elektrisches Wechselstromsignal, wobei das Wechselrichtermittel mit dem ersten Ende der Übertragungsleitung für das Übertragen des COP-Signals an das zweite Ende der Übertragungsleitung gekoppelt ist,
wobei es an dem ersten Ende ein Mittel (15, 16) zum Empfangen, von der Übertragungsleitung, eines Datensignals von dem zweiten Ende gibt,
und wobei das Verfahren in einem Steuersystem für eine Unterwasserkohlenstoffquellenanlage durchgeführt wird, wobei das erste Ende auf der Oberseite ist und das zweite Ende unter Wasser ist.

9. Verfahren nach Anspruch 8, umfassend das Verwenden eines Gleichrichtungsmittels, um ein elektrisches Wechselstromsignal in das Gleichstromsignal umzuwandeln;

10. Verfahren nach Anspruch 8 oder 9, wobei das Wechselrichtermittel (17, 18) eine H-Brücke (17) und Steuermittel (18) umfasst, die Signale erzeugen, die die Schaltungen der H-Brücke betätigen, wobei die Signale pulsweitenmodulierte Signale sind, sodass das COP-Signal ein durch die Analogdaten moduliertes elektrisches Sinuswellensignal ist.

11. Verfahren nach einem der Ansprüche 8 bis 10, wobei das Modulatormittel (13) einen Transistor (23) umfasst, dessen Kollektor und Emitter zwischen dem Versorgungsmittel (12) und dem Wechselrichtermittel (17, 18) in Reihe sind und dessen Basis verbunden ist, um das Analogdatensignal zu empfangen.

12. Verfahren nach einem der Ansprüche 8 bis 11, wobei das Modulatormittel (13) einen Transformator (24) umfasst, der eine erste Wicklung in Reihe zwischen dem Versorgungsmittel (12) und dem Wechselrichtermittel (17, 18) aufweist und eine zweite Wicklung verbunden ist, um das Analogdatensignal zu empfangen.

13. Verfahren nach einem der Ansprüche 8 bis 12, wobei das empfangene Datensignal ein Analogdatensignal ist, wobei das Empfangsmittel (15, 16) das empfangene Analogsignal in ein Digitaldatensignal umwandelt.

14. Verfahren nach Anspruch 13, wobei ein Modem (14) das Digitaldatensignal empfängt, wobei das Modem ferner mit dem Modulatormittel (13) gekoppelt ist, um das Analogdatensignal zu liefern, um das Gleichstromsignal zu modulieren.

## Revendications

1. Système de communication destiné à transmettre de la puissance électrique et des données d'une première extrémité d'une ligne de transmission (1) à une seconde extrémité de la ligne de transmission, l'appareil comprenant, au niveau de ladite première extrémité :
un moyen d'alimentation (12) pour fournir un signal à courant continu (CC) ;
un moyen de modulateur (13) couplé audit moyen d'alimentation pour moduler ledit signal CC avec un signal de données analogique ; et **caractérisé par** :
un moyen d'onduleur (17, 18) couplé audit moyen de modulateur pour convertir le signal CC modulé en un signal de communication sur puissance (COP) comprenant un signal de puissance CA modulé par des données analogiques, le moyen d'onduleur étant couplé à la première extrémité de ladite ligne de transmission pour la transmission dudit signal COP à ladite seconde extrémité de la ligne de transmission,
dans lequel, au niveau de ladite première extrémité, il y a des moyens (15, 16) de réception, en provenance de ladite ligne de transmission, d'un signal de données en provenance de ladite seconde extrémité,
et dans lequel le système comprend un système de commande pour une installation de puits d'hydrocarbures sous-marin, ladite première extrémité étant en surface et ladite seconde extrémité étant sous-marine.

2. Système selon la revendication 1, dans lequel ledit moyen d'alimentation (12) comprend un moyen de redresseur pour convertir un signal de puissance à courant alternatif (CA) en ledit signal CC.

3. Système selon la revendication 1 ou 2, dans lequel ledit moyen d'onduleur (17, 18) comprend un pont en H (17) et des moyens de commande (18) pour générer des signaux pour activer les commutateurs du pont en H, lesdits signaux étant des signaux à modulation de largeur d'impulsion de sorte que ledit signal COP soit un signal de puissance sinusoïdale modulé par lesdites données analogiques.

4. Système selon l'une quelconque des revendications précédentes, dans lequel ledit moyen de modulateur (13) comprend un transistor (23) avec son collecteur et émetteur en série entre ledit moyen d'alimentation (12) et ledit moyen d'onduleur (17, 18) et sa base connectée pour recevoir ledit signal de données analogique.

5. Système selon l'une quelconque des revendications 1 à 3, dans lequel ledit moyen de modulateur (13) comprend un transformateur (24) ayant un premier enroulement en série entre ledit moyen d'alimentation (12) et ledit moyen d'onduleur (17, 18) et un second enroulement connecté pour recevoir ledit signal de données analogique.

6. Système selon l'une quelconque des revendications précédentes, dans lequel le signal de données reçu est un signal de données analogique lors de l'utilisation du système, ledit moyen de réception (15, 16) comprenant un moyen pour convertir le signal analogique reçu en un signal de données numérique.

7. Système selon la revendication 6, comprenant un modem (14) pour recevoir le signal de données numérique, le modem étant en outre couplé audit moyen de modulateur (13) pour fournir le signal de données analogique pour moduler ledit signal CC.

8. Procédé de transmission de puissance électrique et de données d'une première extrémité de ligne de transmission (1) à une seconde extrémité de la ligne de transmission, le procédé comprenant, au niveau de ladite première extrémité :
l'utilisation d'un moyen d'alimentation (12) pour fournir un signal à courant continu (CC) ;
l'utilisation d'un moyen de modulateur (13) pour moduler ledit signal CC avec un signal de données analogique ; et **caractérisé par** :
l'utilisation d'un moyen d'onduleur (17, 18) pour convertir le signal CC modulé en un signal de communication sur puissance (COP) comprenant un signal de puissance CA modulé par des données analogiques, le moyen d'onduleur étant couplé à la première extrémité de ladite ligne de transmission pour la transmission dudit signal COP à ladite seconde extrémité de la ligne de transmission,
dans lequel, au niveau de ladite première extrémité, il y a des moyens (15, 16) qui reçoivent, en provenance de ladite ligne de transmission, un signal de données en provenance de ladite seconde extrémité,
et dans lequel le procédé est réalisé dans un système de commande pour une installation de puits d'hydrocarbures sous-marin, ladite première extrémité étant en surface et ladite seconde extrémité étant sous-marine.

9. Procédé selon la revendication 8, comprenant l'utilisation d'un moyen de redresseur pour convertir un signal de puissance à courant alternatif (CA) en ledit signal CC.

10. Procédé selon la revendication 8 ou 9, dans lequel ledit moyen d'onduleur (17, 18) comprend un pont en H (17) et des moyens de commande (18) qui génèrent des signaux qui activent les commutateurs du pont en H, lesdits signaux étant des signaux à modulation de largeur d'impulsion de sorte que ledit signal COP soit un signal de puissance sinusoïdale modulé par lesdites données analogiques.

11. Procédé selon l'une quelconque des revendications 8 à 10, dans lequel ledit moyen de modulateur (13) comprend un transistor (23) avec son collecteur et émetteur en série entre ledit moyen d'alimentation (12) et ledit moyen d'onduleur (17, 18) et sa base connectée pour recevoir ledit signal de données analogique.

12. Procédé selon l'une quelconque des revendications 8 à 11, dans lequel ledit moyen de modulateur (13) comprend un transformateur (24) ayant un premier enroulement en série entre ledit moyen d'alimentation (12) et ledit moyen d'onduleur (17, 18) et un second enroulement connecté pour recevoir ledit signal de données analogique.

13. Procédé selon l'une quelconque des revendications 8 à 12, dans lequel le signal de données reçu est un signal de données analogique, ledit moyen de réception (15, 16) convertissant le signal analogique reçu en un signal de données numérique.

14. Procédé selon la revendication 13, dans lequel un modem (14) reçoit le signal de données numérique, le modem étant en outre couplé audit moyen de modulateur (13) pour fournir le signal de données analogique pour moduler ledit signal CC.
